# EUROPÄISCHE PATENTSCHRIFT

(11) **EP 2 129 924 B1**
(45) Veröffentlichungstag und Bekanntmachung des Hinweises auf die Patenterteilung: **07.05.2014**
(21) Anmeldenummer: 08735570.7
(22) Anmeldetag: 28.03.2008
(51) Int. Cl.: F16C 17/02, F16C 27/02, F16C 33/20

(54) **KALIBRIERFÄHIGES GLEITLAGERMATERIAL**
CALIBRATABLE PLAIN BEARING MATERIAL
MATERIAU DE PALIER LISSE POUVANT ETRE CALIBRE

(30) Priorität: 29.03.2007 EP 07105250
(43) Veröffentlichungstag der Anmeldung: 09.12.2009
(73) Patentinhaber: Saint-Gobain Performance Plastics Pampus GmbH, 47877 Willich (DE)
(72) Erfinder: JÄGER, Hans-Jürgen, 50354 Hürth (DE); HELDMANN, Jörg, 52080 Aachen (DE); PAVSEK, Vojko, 47877 Willich (DE)
(74) Vertreter: Zimmermann & Partner
(86) Internationale Anmeldenummer: PCT/EP2008/053739
(87) Internationale Veröffentlichungsnummer: WO 2008/119761

(56) Entgegenhaltungen:
- EP-A- 0 297 561
- EP-A1- 0 040 448
- EP-B1- 0 998 637
- WO-A-2005/002342
- DE-A1- 3 601 568
- GB-A- 2 136 063

## Beschreibung

Die Erfindung betrifft ein kalibrierfähiges Gleitlagermaterial umfassend ein metallisches Substratmaterial mit einer Oberfläche und eine die Oberfläche des Substratmaterials überdeckende Gleitschicht, wobei die Dicke der Gleitschicht 100 µm bis 320 µm beträgt. Ferner betrifft die Erfindung eine Gleitlagerbuchse sowie vorteilhafte Verwendungen des Gleitlagermaterials.

Gleitlagerwerkstoffe der eingangs genannten Art, welche üblicherweise aus einem Schichtsystem bestehend aus einem metallischen Substratmaterial und einer Gleitschicht meist in Form eines Kunststoffes zusammengesetzt sind, werden für verschiedenste Anwendungen eingesetzt, bei denen zueinander bewegliche Teile drehbar, schwenkbar oder translatorisch gleitend miteinander verbunden werden sollen. Unter anderem eignen sie sich zur Fertigung von Gleitlagerbuchsen. Diese wiederum finden vielseitig Verwendung in Scharnieren und Lagern verschiedenster Art, insbesondere im Automobilbereich. Rein beispielhaft seien hier Türscharniere, Sitzverstellsysteme, Pedallerie, Kofferraumscharniere, Lenksäulenverstellungen oder Stoßdämpfer genannt.

Das hier stets zum Einsatz kommende Gleitlagermaterial, welches je nach Anwendungsfall als Gleitlagerfläche oder Gleitlagerbuchse vorliegt, ist wartungsfrei, d.h. eine Schmierung der Lager ist nicht erforderlich.

Ein als selbstschmierendes Lager bezeichnetes Gleitlagermaterial der eingangs genannten Art ist aus der EP 0 998 637 B1 bekannt. Dieses Gleitlagermaterial umfasst ein metallisches Substratmaterial sowie eine darüber angeordnete Gleitschicht. Das Gleitlagermaterial ist für hohe Druckbelastungen im Bereich von 200 MPa ausgelegt. Um bei derartigen Druckbelastungen ein Kriechen der bevorzugt ein Fluorpolymer, insbesondere Polytetrafluorethylen (PTFE), enthaltenen Gleitschicht zu verhindern, ist bei diesem Gleitlagermaterial vorgesehen, dass die Oberfläche des Substratmaterials ausgeprägt strukturiert ist, wodurch die auf das Substratmaterial auflaminierte Gleitschicht in diesem fest verankert ist.

Bevorzugt weist dieses Gleitlagermaterial eine Bronzeplattierung als Zwischenschicht auf, in welche die Strukturierung eingraviert ist. Das Substratmaterial selbst kann aus verschiedenen metallischen Werkstoffen, insbesondere Stahl oder Aluminium, bestehen.

Wie bereits erwähnt, zeichnet sich dieses aus dem Stand der Technik bekannte Gleitmaterial durch eine sehr hohe Druckbelastbarkeit aus, wobei im Betrieb der Kriechneigung des Gleitwerkstoffes durch eine stark ausgeprägte Strukturierung der Substratoberfläche bzw. durch die Festigkeit des Substrats entgegengewirkt wird. Diese Eigenschaften qualifizieren es für einen Einsatz beispielsweise in Fahrzeugtürscharnieren oder den besonders belasteten vorderen Stoßdämpfern eines Kraftfahrzeugs.

Nachteilig an diesem Gleitlagermaterial ist, dass es eine sehr hohe Fertigungsgenauigkeit bei den mit dem Gleitlagermaterial auszukleidenden Lagergehäusen erfordert, um einen passgenauen Sitz des Gleitlagermaterials im Lagergehäuse zu gewährleisten.

Ausgehend von diesem Stand der Technik liegt der Erfindung daher die Aufgabe zugrunde, ein Gleitlagermaterial der eingangs genannten Art anzugeben, welches einfach zu fertigen ist und bei den Lagergehäusen höhere Fertigungstoleranzen erlaubt.

Die Aufgabe wird erfindungsgemäß mit einem Gleitlagermaterial gemäß dem Oberbegriff des Patentanspruches 1 dadurch gelöst, dass das Gleitlagermaterial ohne Metallgewebe- bzw. Streckmetalleinlagen ausgebildet ist und dass das metallische Substratmaterial eine Streckgrenze < 100 N/mm² aufweist.

Der Vorteil des erfindungsgemäßen Gleitlagermaterials liegt darin, dass sich das metallische Substratmaterial vergleichsweise leicht plastisch verformen lässt. Dies ermöglicht eine besonders einfache Kalibrierung des Gleitlagermaterials. So ist es beispielsweise möglich, aus dem erfindungsgemäßen Gleitlagermaterial eine Gleitlagerbuchse zu fertigen, welche anschließend in ein Lagergehäuse, dessen Form durch den jeweiligen Anwendungsfall vorgegeben ist, eingesetzt werden kann. Anschließend kann das Gleitlagermaterial in dem Lagergehäuse durch ein geeignetes Formwerkzeug, meist einen Kalibrierdorn, plastisch aufgeweitet werden, wobei der gewünschte Innendurchmesser eingestellt wird. Durch die gute plastische Verformbarkeit können zudem gröber tolerierte Lagergehäuse verwendet werden, was entsprechend die Ausschussproduktion bei der Fertigung der Lagergehäuse verringert und somit die Gesamtkosten für das Gleitlager senkt. Da das erfindungsgemäße Gleitlagermaterial trotz exzellenter Kalibrierfähigkeit ohne Metallgewebe- bzw. Streckmetalleinlagen auskommt, ist es für die kostengünstige Massenproduktion hervorragend geeignet.

Nach einer ersten vorteilhaften Ausgestaltung der Erfindung besteht das metallische Substratmaterial aus einer Aluminium-Legierung, vorzugsweise aus AA3005. Bei der letztgenannten Legierung handelt es sich um eine besonders leicht plastisch verformbare Aluminiumlegierung mit einer Streckgrenze von ca. 55 N/mm², deren Einsatz die Kalibrierfähigkeit des erfindungsgemäßen Gleitlagermaterials entscheidend weiter erhöht. Wie Untersuchungen der Anmelderin gezeigt haben, ist durch den Einsatz einer AA3005 Aluminium-Legierung eine Gesamtverformbarkeit der Gleitlagerschicht von ca. 5 % erreichbar. Wird das Gleitlagermaterial anschließend zu einer zylindrischen Lagerbuchse umgeformt, ergibt sich somit bezogen auf den Buchsendurchmesser eine Verformbarkeit von insgesamt 10 %. Hierdurch können im Zuge der Kalibrierung des Gleitlagers Fertigungstoleranzen wirksam ausgeglichen werden.

Im Falle des Einbaus des Gleitlagermaterials in Aluminium-Lagergehäuse besteht ein weiterer Vorteil darin, dass infolge der Werkstoffidentität bzw. -ähnlichkeit (bei unterschiedlichen Aluminium-Legierungen) die Gefahr einer Kontaktkorrosion zwischen dem Substratmaterial und dem Material des Lagergehäuses minimiert bzw. ausgeschlossen ist. Schließlich handelt es sich bei Aluminium um ein besonders gut wärmeleitendes Substratmaterial, so dass die im Betrieb entstehende Reibungswärme schnell abgeführt werden kann, was die Lebensdauer des Gleitlagers erhöht.

Aufgrund der hohen Verformbarkeit des Substratmaterials eignet sich das erfindungsgemäße Gleitlagermaterial insbesondere für Anwendungen mit geringer Druckbelastung, beispielsweise im Bereich von 10 - 20 MPa. Hierbei ist der Einsatz von Gleitlagern bei Federgabeln für Fahrräder oder Motorräder zu nennen, ebenso wie die Anwendung in geringer belasteten Stoßdämpfern (hintere Stoßdämpfer in einem Kraftfahrzeug), in Lenksystemen oder in verschiedenen Motorkomponenten, beispielsweise einem Zahnriemenspanner. Durch die hohe Kalibrierfähigkeit wird bei diesen Anwendungen durch das erfindungsgemäße Gleitlagermaterial eine stets sehr präzise ausgebildete Lagergeometrie gewährleistet.

Das Substratmaterial kann in unterschiedlicher Dicke ausgeführt sein. Bevorzugt wird eine Dicke von 0,5 mm bis 2,5 mm.

Um eine bessere Haftung der Gleitschicht auf dem Substratmaterial zu erreichen, ist nach einer weiteren vorteilhaften Ausgestaltung der Erfindung vorgesehen, dass die Oberfläche des Substratmaterials strukturiert ist. Da mit der Strukturierung lediglich eine Vergrößerung der Oberfläche, nicht aber eine Unterdrückung der Kriechneigung des Gleitlagermaterials erreicht werden soll, ist es ausreichend, dass die Tiefe der Strukturierung senkrecht zur Oberfläche des Substratmaterials 30 µm bis 70 µm, vorzugsweise ca. 35 µm beträgt.

Die Strukturierung der Oberfläche kann in verschiedensten Geometrien erfolgen. Entscheidend kommt es stets darauf an, dass die Oberfläche des Substratmaterials hinreichend vergrößert bzw. aufgerauht wird, um eine bessere Haftung der Gleitschicht auf dem Substratmaterial zu ermöglichen. Besonders bevorzugt wird dabei eine Wabenstruktur mit stegartigen Erhebungen und Senken, die beispielsweise durch Kalandrieren in die Oberfläche des Substratmaterials eingebracht wird. Als Wabenstruktur wird hier in üblicher Weise ein Muster aus flächig angeordneten sechseckigen zellen (Waben) verstanden, wobei die Waben als Senken durch die stegartigen Erhebungen umfangsmäßig begrenzt werden. Hierbei ist es ausreichend, dass die Breite der Waben, gemessen als Abstand zwischen parallel verlaufenden Stegen einer Wabe, 100 µm bis 1000 µm, vorzugsweise ca. 400 µm, beträgt. Entsprechend zur vergleichsweise gering ausgeprägten Tiefe der Strukturierung kann die darüberliegende Gleitschicht vergleichsweise dick ausgeführt sein. Erfindungsgemäße Dicken der Gleitschicht liegen im Bereich zwischen 100 µm bis 320 µm, vorzugsweise 220 µm bis 280 µm, insbesondere ca. 250 µm.

Die Gleitschicht selbst besteht bevorzugt aus einem Kunststoff, insbesondere einem Polymer-Compound. Als Polymer-Compound eignet sich insbesondere ein Fluorpolymer vorzugsweise das als Gleitlagermaterial bereits seit Jahren bewährte Polytetrafluorethylen (PTFE). Um die Verschleißfestigkeit der Gleitschicht zu erhöhen, ist nach einer weiteren vorteilhaften Ausgestaltung der Erfindung vorgesehen, dass die Gleitschicht entsprechende Füllstoffe enthält. Hierbei handelt es sich bevorzugt um Graphit und/oder einen aromatischen Polyester, wobei dessen Anteil im Füllstoff bevorzugt etwa 15% beträgt.

Nach einer weiteren vorteilhaften Lehre der Erfindung ist die Gleitschicht mittels einer Klebeschicht mit dem Substratmaterial verbunden. Bevorzugt enthält die Klebeschicht ein Fluorpolymer, insbesondere ein Ethylen-Tetrafluorethylen-Copolymer (ETFE). Beim Aufbringen der Klebeschicht und anschließendem Auflaminieren der Gleitschicht füllt die Klebeschicht die Senken der Oberflächenstrukturierung des Substratmaterials vollständig aus, wobei die Erhebungen der Oberflächenstrukturierung vollständig bedeckt bleiben. Die Dicke dieser Bedeckung beträgt bevorzugt 5 µm bis 20 µm, vorzugsweise 10 µm bis 15 µm.

Das erfindungsgemäße Gleitlagermaterial eignet sich insbesondere zur Herstellung einer Gleitlagerbuchse. Üblicherweise handelt es sich bei diesen Gleitlagerbuchsen um einen in eine zylinderform umgeformten Gleitlagermaterialstreifen, wobei die einander zugewandten Enden nicht miteinander gefügt werden, sondern einen Längsschlitz begrenzen.

Hierbei ist nach einer vorteilhaften Ausgestaltung der Erfindung vorgesehen, dass die Breite dieses Längsschlitzes geringer ist als die Dicke des Gleitlagermaterials der Gleitlagerbuchse. Dies lässt sich durch die hohe plastische Verformbarkeit des erfindungsgemäßen Gleitlagermaterials problemlos erreichen. Gleitlagerbuchsen, die diese Bedingung erfüllen, werden auch als geschlossene Buchsen bezeichnet und haben den Vorteil, dass bei Auslieferung als Schüttgut die Gefahr eines gegenseitigen Verhakens der Gleitlagerbuchsen (Kettenbildung) ausgeschlossen ist. Ein Substratmaterial, mit höherer Streckgrenze würde aufgrund seiner höheren Elastizität ein "Schließen" des Schlitzes verhindern. Entsprechend kann durch eine geeignete Auswahl der Aluminiumlegierung, beispielsweise einer AA3005 Aluminium-Legierung mit besonders niedriger Streckgrenze, bei zylindrischen Gleitlagerbuchsen mit oder ohne Flansch ein geschlossener Spalt im Anlieferzustand der Buchse erreicht werden.

Im Folgenden wird die Erfindung anhand einer ein Ausführungsbeispiel darstellenden zeichnung näher erläutert.

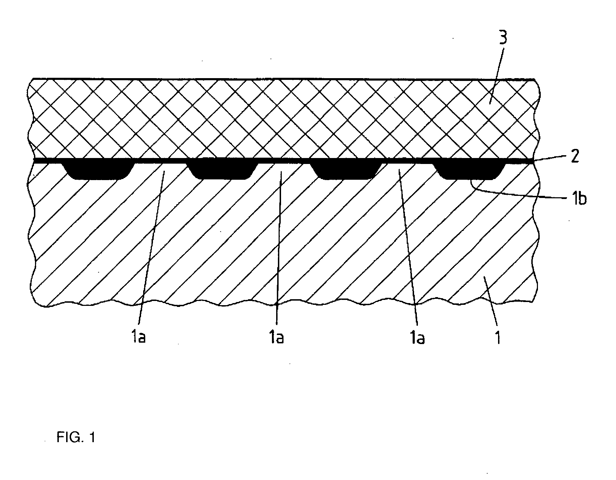

In der einzigen zeichnung ist ein erfindungsgemäßen Gleitlagermaterial im Querschnitt dargestellt. Es umfasst ein metallisches Substratmaterial 1 mit einer Oberfläche und eine die Oberfläche des Substratmaterials 1 überdeckende Gleitschicht 3. Das Substratmaterial 1 besteht erfindungsgemäß aus einem metallischen Werkstoff mit einer Streckgrenze < 100 N/mm², vorliegend einer Aluminium-Legierung, bevorzugt AA3005. Aufgrund der besonders niedrigen Streckgrenze dieser Legierung (55 N/mm²) lässt sich das Substratmaterial 1 einfach plastisch verformen, wodurch die Kalibrierfähigkeit des Gleitlagermaterials stark verbessert wird.

Die Gleitschicht 3 besteht bevorzugt aus einem Polymer-Compound, vorliegend PTFE. Zur Verbesserung der Verschleißfestigkeit der Gleitschicht 3 enthält die Gleitschicht 3 ferner entsprechende Füllstoffe, vorliegend Graphit und einen aromatischen Polyester, wobei dessen Anteil im Polymer-Compound 0 bis 30 %, bevorzugt 10 bis 25 %, insbesondere etwa 15% beträgt. Der Gesamtfüllstoffanteil beträgt 10 bis 30 Prozent, bevorzugt etwa 20%.

Eine sichere Haftung der Gleitschicht 3 auf dem Substratmaterial 1 wird vorliegend durch eine zwischen Gleitschicht 3 und Substratmaterial 1 vorgesehene Klebeschicht 2 gewährleistet. Bei der Klebeschicht 2 handelt es sich vorliegend um ein Fluorpolymer, nämlich ein Ethylen-Tetrafluorethylen-Copolymer (ETFE).

Hinsichtlich der Schichtdimensionierung weist das Substratmaterial 1 vorliegend eine Schichtdicke von ca. 1,4 mm auf, während die Dicke der Gleitschicht 3 vorliegend ca. 250 µm beträgt.

Wie in der Zeichnung dargestellt, ist die Oberfläche des Substratmaterials 1 strukturiert, um eine bessere durch die Klebeschicht 2 vermittelte Haftung der Gleitschicht 3 auf dem Substratmaterial 1 zu erreichen. Dabei kann die Oberfläche prinzipiell in all solchen geometrischen Formen strukturiert sein, die eine signifikante Vergrößerung der Oberfläche sicherstellen. Vorliegend ist eine Wabenstruktur gewählt mit regelmäßigen stegartigen Erhebungen 1a und durch die Erhebungen eingefasste Senken (Waben) 1b. Die Höhe der stegartigen Erhebungen 1a beträgt vorliegend ca. 35 µm und die Breite der Senken 1b, definiert als Abstand zwischen parallel verlaufenden Stegen 1a einer Wabe, im Mittel ca. 400 µm. Hierdurch wird eine hinreichende Oberflächenvergrößerung erreicht, die, wie erwähnt, zu einer Verbesserung der Haftung der Gleitschicht 3 führt.

Wie aus der Zeichnung ferner hervorgeht, ist die Klebeschicht 2 derart auf die strukturierte Oberfläche des Substratmaterials 1 aufgebracht, dass sie die Senken 1b der Oberflächenstrukturierung des Substratmaterials 1 vollständig ausfüllt und die Erhebungen 1a der Oberflächenstrukturierung vollständig bedeckt. Die Dicke der die Erhebungen 1a bedeckenden Klebeschicht 2 beträgt dabei vorliegend 10 µm bis 15 µm.

Nicht dargestellt ist eine aus dem vorstehend beschriebenen erfindungsgemäßen Gleitlagermaterial geformte längsgeschlitzte Gleitlagerbuchse. Aufgrund der hohen plastischen Verformbarkeit des erfindungsgemäß eingesetzten Substratmaterials ist es hierbei möglich, die Buchse derart zu formen, dass die Breite des Längsschlitzes geringer ist als die Dicke der Gleitlagermaterialschicht. Hierdurch wird verhindert, dass sich die Gleitlagerbuchsen, welche als Schüttgut ausgeliefert werden, ineinander verhaken.

Eine solche Gleitlagerbuchse eignet sich für eine Vielzahl von Anwendungen vergleichsweise geringer Druckbelastungen, beispielsweise in Federgabeln für Zweiräder ebenso wie in geringer belasteten Stoßdämpfern (hintere Stoßdämpfer in einem Kraftfahrzeug), Lenksystemen oder verschiedenen Motorkomponenten, beispielsweise in einem Zahnriemenspanner.

Das erfindungsgemäße Gleitlagermaterial eignet sich für eine Reihe weiterer Verwendungen. So ist es in vorteilhafter Weise in der Lebensmittelindustrie einsetzbar. Dies gilt für die bevorzugt als Gleitmaterial eingesetzten Polymer-Compounds, insbesondere für ein Fluorpolymer enthaltende Polymer-Compounds. Bei der Auswahl der in der Gleitschicht üblicherweise enthaltenen Füllstoffe ist entsprechend auf eine Lebensmitteltauglichkeit zu achten. Das mit einer entsprechend zusammengesetzten Gleitschicht versehene erfindungsgemäße Gleitlagermaterial eignet sich insbesondere für einen Einsatz in der Backindustrie, da die hohe Wärmeleitfähigkeit, insbesondere bei Einsatz einer Aluminiumlegierung als metallisches Substratmaterial einen guten Wärmedurchgang zum Backgut sicherstellt. Weiter ist eine gute

Korrosionsbeständigkeit auch bei wechselnder Temperaturbeanspruchung - z.B, beim Einsatz als Antihaftbeschichtung in Backöfen - gewährleistet. Wird das Gleitlagermaterial zur Auskleidung von Backformen eingesetzt, so ist eine rückstandsfreie Entformung möglich und es kann entsprechend auf eine Schmierung der Backform verzichtet werden.

Aufgrund der hohen Umformbarkeit bzw. Tiefziehfähigkeit des erfindungsgemäßen Gleitlagermaterials lassen sich Backformen unterschiedlichster Geometrie ohne großen fertigungstechnischen Aufwand erzeugen.

## Patentansprüche

1. Gleitlagermaterial umfassend ein metallisches Substratmaterial (1) mit einer Oberfläche und eine die Oberfläche des Substratmaterials (1) überdeckende Gleitschicht (3), wobei die Dicke der Gleitschicht (3) 100 µm bis 320 µm beträgt
**dadurch gekennzeichnet, dass** das Gleitlagermaterial ohne Metallgewebe- bzw. Streckmetalleinlagen ausgebildet ist und dass das metallische Substratmaterial (1) eine Streckgrenze < 100 N/mm² aufweist.

2. Gleitlagermaterial nach Anspruch 1,
**dadurch gekennzeichnet, dass** das metallische Substratmaterial (1) aus einer Aluminium-Legierung, vorzugsweise AA3005, besteht.

3. Gleitlagermaterial nach Anspruch 1,
**dadurch gekennzeichnet, dass** die Dicke des Substratmaterials (1) 0,5 mm bis 2,5 mm beträgt.

4. Gleitlagermaterial nach einem der Ansprüche 1 bis 3,
**dadurch gekennzeichnet, dass** die Oberfläche des Substratmaterials (1) strukturiert ist.

5. Gleitlagermaterial nach Anspruch 4,
**dadurch gekennzeichnet, dass** die Tiefe der Strukturierung senkrecht zur Oberfläche des Substratmaterials (1) 30 µm bis 70 µm, vorzugsweise ca. 35 µm, beträgt.

6. Gleitlagermaterial nach Anspruch 4 oder 5,
**dadurch gekennzeichnet, dass** die Oberfläche des Substratmaterials (1) eine Wabenstruktur mit stegartigen Erhebungen (1a) und Senken (1b) aufweist.

7. Gleitlagermaterial nach Anspruch 6,
**dadurch gekennzeichnet, dass** die Breite der Waben, gemessen als Abstand zwischen parallel verlaufenden Stegen (1b) einer Wabe, 100 µm bis 1000 µm, vorzugsweise ca. 400 µm, beträgt.

8. Gleitlagermaterial nach einem der Ansprüche 4 bis 7,
**dadurch gekennzeichnet, dass** die Strukturierung durch Kalandrieren in das Substratmaterial (1) eingebracht ist.

9. Gleitlagermaterial nach einem der Ansprüche 1 bis 8,
**dadurch gekennzeichnet, dass** die Dicke der Gleitschicht (3) 220 µm bis 280 µm, insbesondere ca. 250 µm, beträgt.

10. Gleitlagermaterial nach einem der Ansprüche 1 bis 9,
**dadurch gekennzeichnet, dass** die Gleitschicht (3) aus einem Polymer-Compound besteht.

11. Gleitlagermaterial nach Anspruch 10,
**dadurch gekennzeichnet, dass** der Polymer-Compound ein Fluorpolymer, insbesondere Polytetrafluorethylen (PTFE), enthält.

12. Gleitlagermaterial nach einem der Ansprüche 1 bis 11,
**dadurch gekennzeichnet, dass** die Gleitschicht (3) die Verschleißfestigkeit erhöhende Füllstoffe enthält.

13. Gleitlagermaterial nach Anspruch 12,
**dadurch gekennzeichnet, dass** der Gesamtfüllstoffanteil 10 bis 30 %, bevorzugt etwa 20 % beträgt.

14. Gleitlagermaterial nach Anspruch 12 oder 13,
**dadurch gekennzeichnet, dass** als Füllstoffe Graphit und/oder ein aromatischer Polyester eingesetzt sind.

15. Gleitlagermaterial nach Anspruch 13,
**dadurch gekennzeichnet, dass** der Füllstoffanteil des aromatischen Polyesters im Polymer-Compound 0 - 30 %, bevorzugt 10 bis 25 %, insbesondere ca. 15 % beträgt.

16. Gleitlagermaterial nach einem der Ansprüche 1 bis 15,
**dadurch gekennzeichnet, dass** die Gleitschicht (3) mittels einer Klebeschicht (2) mit dem Substratmaterial (1) verbunden ist.

17. Gleitlagermaterial nach Anspruch 16,
**dadurch gekennzeichnet, dass** die Klebeschicht (2) ein Fluorpolymer, insbesondere ein Ethylen-Tetrafluorethylen-Copolymer (ETFE), enthält.

18. Gleitlagermaterial nach Anspruch 16 oder 17 und Anspruch 4,
**dadurch gekennzeichnet, dass** die Klebeschicht (2) die Senken (1b) der Oberflächenstrukturierung des Substratmaterials (1) vollständig ausfüllt und die stegartigen Erhebungen (1a) der Oberflächenstrukturierung vollständig bedeckt.

19. Gleitlagermaterial nach Anspruch 18,
**dadurch gekennzeichnet, dass** die stegartigen Erhebungen (1a) der Oberflächenstrukturierung mit einer Schichtdicke des Klebers von 5 µm bis 20 µm, vorzugsweise 10 µm bis 15 µm, bedeckt sind.

20. Gleitlagerbuchse mit einem Gleitlagermaterial nach einem der Ansprüche 1 bis 19.

21. Gleitlagerbuchse nach Anspruch 20,
**dadurch gekennzeichnet, dass** die Gleitlagerbuchse längs geschlitzt ist, wobei die Breite des Längsschlitzes geringer ist als die Dicke des Gleitlagermaterials der Gleitlagerbuchse.

22. Verwendung eines Gleitlagermaterials nach einem der Ansprüche 1 bis 19 in einem Gleitlager.

23. Verwendung eines Gleitlagermaterials nach einem der Ansprüche 1 bis 19 zur Auskleidung von Gefäßen zur Aufbewahrung und/oder zur Zübereitung von Speisen.

24. Verwendung eines Gleitlagermaterials nach einem der Ansprüche 1 bis 19 zur Innenbeschichtung von Backformen.

25. Verwendung eines Gleitlagermaterials nach einem der Ansprüche 1 bis 19 zur Innenbeschichtung von Backöfen.

## Claims

1. A plain bearing material comprising a metallic substrate material (1) having a surface and a sliding layer (3) covering the surface of the substrate material (1), wherein the thickness of the sliding layer (3) is 100 µm to 320 µm,
**characterized in that**
the plain bearing material is formed without metal mesh or expanded metal inlays and that the metallic substrate material (1) has a yield point < 100 N/mm².

2. The plain bearing material as claimed in claim 1,
**characterized in that**
the metallic substrate material (1) consists of an aluminum alloy, preferably AA3005.

3. The plain bearing material as claimed in claim 1,
**characterized in that**
the thickness of the substrate material (1) is 0.5 mm to 2.5 mm.

4. The plain bearing material as claimed in one of claims 1 to 3,
**characterized in that**
the surface of the substrate material (1) is structured.

5. The plain bearing material as claimed in claim 4,
**characterized in that**
the depth of the structure perpendicular to the surface of the substrate material (1) is 30 µm to 70 µm, preferably approx. 35 µm.

6. The plain bearing material as claimed in claim 4 or 5,
**characterized in that**
the surface of the substrate material (1) has a honeycomb structure with ridge-like elevations (1a) and depressions (1b) .

7. The plain bearing material as claimed in claim 6,
**characterized in that**
the width of the honeycombs, measured as the distance between parallel ridges (1b) of a honeycomb, is 100 µm to 1000 µm, preferably approx. 400 µm.

8. The plain bearing material as claimed in one of claims 4 to 7,
**characterized in that**
the structure is introduced into the substrate material (1) by calendering.

9. The plain bearing material as claimed in one of claims 1 to 8,
**characterized in that**
the thickness of the sliding layer (3) is 220 µm to 280 µm, in particular approx. 250 µm.

10. The plain bearing material as claimed in one of claims 1 to 9,
**characterized in that**
the sliding layer (3) consists of a polymer compound.

11. The plain bearing material as claimed in claim 10,
**characterized in that**
the polymer compound contains a fluoropolymer, in particular polytetrafluoroethylene (PTFE).

12. The plain bearing material as claimed in one of claims 1 to 11,
**characterized in that**
the sliding layer (3) contains the filler materials which increase the resistance to wear.

13. The plain bearing material as claimed in claim 12,
**characterized in that**
the total proportion of filler material is 10 to 30%, preferably approx. 20%.

14. The plain bearing material as claimed in claim 12 or 13,
**characterized in that**
graphite and/or an aromatic polyester are used as filler materials.

15. The plain bearing material as claimed in claim 14,
**characterized in that**
the proportion of filler material of the aromatic polyester in the polymer compound is 0 to 30%, preferably 10 to 25%, in particular approx. 15%.

16. The plain bearing material as claimed in one of claims 1 to 15,
**characterized in that**
the sliding layer (3) is bonded to the substrate material (1) by means of an adhesive layer (2).

17. The plain bearing material as claimed in claim 16,
**characterized in that**
the adhesive layer (2) contains a fluoropolymer, in particular an ethylene tetrafluoroethylene copolymer (ETFE).

18. The plain bearing material as claimed in claim 16 or 17 and claim 4,
**characterized in that**
the adhesive layer (2) completely fills the depressions (1b) of the surface structure of the substrate material (1) and completely covers the ridge-like elevations (1a) of the surface structure.

19. The plain bearing material as claimed in claim 18,
**characterized in that**
the ridge-like elevations (1a) of the surface structure are covered with a layer thickness of the adhesive of 5 µm to 20 µm, preferably 10 µm to 15 µm.

20. A plain bearing bush having a plain bearing material as claimed in one of claims 1 to 19.

21. The plain bearing bush as claimed in claim 20,
**characterized in that**
the plain bearing bush is slotted longitudinally, wherein the width of the longitudinal slot is less than the thickness of the plain bearing material of the plain bearing bush.

22. The use of a plain bearing material as claimed in one of claims 1 to 19 in a plain bearing.

23. The use of a plain bearing material as claimed in one of claims 1 to 19 for lining containers for storing and/or preparing food.

24. The use of a plain bearing material as claimed in one of claims 1 to 19 for coating the insides of baking dishes.

25. The use of a plain bearing material as claimed in one of claims 1 to 19 for coating the insides of ovens.

## Revendications

1. Matière pour palier lisse comprenant une matière de substrat métallique (1) comportant une surface et une couche de glissement (3) qui recouvre la surface de la matière de substrat (1), l'épaisseur de la couche de glissement (3) étant de 100 µm à 320 µm,
**caractérisée en ce que**
la matière pour palier lisse est réalisée sans insertions de toile métallique ni de métal déployé et **en ce que** la matière de substrat métallique (1) présente une limite élastique < 100 N/mm².

2. Matière pour palier lisse selon la revendication 1,
**caractérisée en ce que**
la matière de substrat métallique (1) est composée d'un alliage d'aluminium, de préférence le AA3005.

3. Matière pour palier lisse selon la revendication 1,
**caractérisée en ce que**
l'épaisseur de la matière de substrat (1) est de 0,5 mm à 2,5 mm.

4. Matière pour palier lisse selon l'une des revendications 1 à 3,
**caractérisée en ce que**
la surface de la matière de substrat (1) est structurée.

5. Matière pour palier lisse selon la revendication 4,
**caractérisée en ce que**
la profondeur de structuration, perpendiculairement à la surface de la matière de substrat (1), est de 30 µm à 70 µm, de préférence d'environ 35 µm.

6. Matière pour palier lisse selon l'une des revendications 4 ou 5,
**caractérisée en ce que**
la surface de la matière de substrat (1) présente une structure alvéolée comprenant des saillies en forme de barres (1a) et des creux (1b).

7. Matière pour palier lisse selon la revendication 6,
**caractérisée en ce que**
la largeur des alvéoles, mesurée en tant que distance entre les barres (1b) parallèles d'une alvéole, est de 100 µm à 1000 µm, de préférence d'environ 400 µm.

8. Matière pour palier lisse selon l'une des revendications 4 à 7,
**caractérisée en ce que**
la structuration est imprimée dans la matière de substrat (1) par calandrage.

9. Matière pour palier lisse selon l'une des revendications 1 à 8,
**caractérisée en ce que**
l'épaisseur de la couche de glissement (3) est de 220 µm à 280 µm, en particulier d'environ 250 µm.

10. Matière pour palier lisse selon l'une des revendications 1 à 9,
**caractérisée en ce que**
la couche de glissement (3) est faite d'un composé de polymère.

11. Matière pour palier lisse selon la revendication 10,
**caractérisée en ce que**
le composé de polymère contient un fluoropolymère, en particulier le polytétrafluoréthylène (PTFE).

12. Matière pour palier lisse selon l'une des revendications 1 à 11,
**caractérisée en ce que**
la couche de glissement (3) contient des charges qui augmentent la résistance à l'usure.

13. Matière pour palier lisse selon la revendication 12,
**caractérisée en ce que**
la proportion totale de charges est de 10 à 30 %, de préférence d'environ 20 %.

14. Matière pour palier lisse selon l'une des revendications 12 ou 13,
**caractérisée en ce que**
du graphite et/ou un polyester aromatique sont utilisés comme charges.

15. Matière pour palier lisse selon la revendication 13,
**caractérisée en ce que**
la proportion de charges du polyester aromatique dans le composé de polymère est de 0-30 %, de préférence de 10 à 25 %, en particulier d'environ 15 %.

16. Matière pour palier lisse selon l'une des revendications 1 à 15,
**caractérisée en ce que**
la couche de glissement (3) est liée à la matière de substrat (1) au moyen d'une couche de colle (2).

17. Matière pour palier lisse selon la revendication 16,
**caractérisée en ce que**
la couche de colle (2) contient un fluoropolymère, en particulier un copolymère éthylène-tétrafluoréthylène (ETFE).

18. Matière pour palier lisse selon l'une des revendications 16 ou 17 et de la revendication 4,
**caractérisée en ce que**
la couche de colle (2) remplit entièrement les creux (1b) de la structuration superficielle de la matière de substrat (1) et recouvre entièrement les saillies en forme de barres (1a) de la structuration superficielle.

19. Matière pour palier lisse selon la revendication 18,
**caractérisée en ce que**
les saillies en forme de barres (1a) de la structuration superficielle sont recouvertes d'une épaisseur de couche de la colle de 5 µm à 20 µm, de préférence de 10 µm à 15 µm.

20. Coussinet lisse comportant une matière pour palier lisse selon l'une des revendications 1 à 19.

21. Coussinet lisse selon la revendication 20,
**caractérisé en ce que**
le coussinet lisse est fendu longitudinalement, la largeur de la fente longitudinale étant inférieure à l'épaisseur de la couche de matière pour palier lisse du coussinet lisse.

22. Utilisation d'une matière pour palier lisse selon l'une des revendications 1 à 19 dans un palier lisse.

23. Utilisation d'une matière pour palier lisse selon l'une des revendications 1 à 19 pour le revêtement de récipients destinés à la conservation et/ou à la préparation d'aliments.

24. Utilisation d'une matière pour palier lisse selon l'une des revendications 1 à 19 pour le revêtement interne de moules à pâtisserie.

25. Utilisation d'une matière pour palier lisse selon l'une des revendications 1 à 19 pour le revêtement interne de fours de boulangerie.
